# EUROPEAN PATENT SPECIFICATION

(11) **EP 3 181 862 B1**
(45) Date of publication and mention of the grant of the patent: **22.04.2020**
(21) Application number: 16204864.9
(22) Date of filing: 16.12.2016
(51) Int. Cl.: F02C 7/042, B64D 33/02

(54) **GAS TURBINE ENGINE WITH ROTATING INLET**
GASTURBINENMOTOR MIT ROTIERENDEM EINLASS
TURBINE À GAZ AYANT UNE ADMISSION ROTATIVE

(30) Priority: 18.12.2015 US 201514974195
(43) Date of publication of application: 21.06.2017
(73) Proprietor: United Technologies Corporation, Farmington, CT 06032 (US)
(72) Inventor: ALI, Amr, South Windsor, CT Connecticut 06074 (US); SAWYERS-ABBOTT, Nigel David, South Glastonbury, CT Connecticut 06073 (US)
(74) Representative: Dehns

(56) References cited:
- WO-A1-2014/137685
- US-A1- 2004 113 014
- US-A1- 2015 044 028
- US-A1- 2015 284 104

## Description

### BACKGROUND OF THE INVENTION

This application relates to a gas turbine engine having minimized inlet distortion.

Gas turbine engines are known and typically include a fan delivering air into a bypass duct as propulsion air and into a compressor as core flow. The air is compressed in the compressor and delivered into a combustor where it is mixed with fuel and ignited. Products of this combustion pass downstream over turbine rotors, driving them to rotate.

Recently, a gear reduction has been incorporated between a fan drive turbine and the fan rotor. This has increased the design freedom for the gas turbine engine designer. In particular, the fan can now be made to rotate slower than the turbine. With this change, the diameter of the fan has increased.

It has recently been proposed to provide a gas turbine engine, where the inlet or area of a surrounding housing or nacelle forward of the fan rotor, is shorter than in the past. Providing a shorter inlet reduces the weight of the engine and also reduces external drag. Other benefits include reducing a bending moment and corresponding load on an engine structure during flight conditions such as takeoff. Further, by making the inlet shorter, the overall envelope of the engine is reduced.

However, the shorter inlets raise various challenges including a decreased ability to attenuate noise generated by the engine.

US 2015/284104 A1 discloses a prior art gas turbine engine as set forth in the preamble of claim 1.

US 2004/113014 A1 and US 2015/044028 A1 disclose other prior art engines.

### SUMMARY OF THE INVENTION

According to the present invention, a gas turbine engine is provided as set forth in claim 1.

In an embodiment, a motor drives a geared output member to engage gear teeth on the nacelle to cause the nacelle to rotate.

In another embodiment according to any of the previous embodiments, the nacelle is guided for rotation within a static structure.

In another embodiment according to any of the previous embodiments, the ratio is greater than about 0.25.

In another embodiment according to any of the previous embodiments, the ratio is greater than about 0.30.

In another embodiment according to any of the previous embodiments, the ratio is less than about 0.40.

In another embodiment according to any of the previous embodiments, the distance measured to the one portion of the nacelle still results in a ratio less than about 0.45, and the distance measured to the other portion of the nacelle still results in the ratio greater than about 0.2.

There is further provided a method of operating a gas turbine engine as set forth in claim 2.

In an embodiment, a motor drives a geared output member to engage gear teeth on the nacelle to cause the nacelle to rotate.

In another embodiment according to any of the previous embodiments, the nacelle is guided for rotation within a static structure.

In another embodiment according to any of the previous embodiments, the ratio is greater than about 0.25.

In another embodiment according to any of the previous embodiments, the ratio is greater than about 0.30.

In another embodiment according to any of the previous embodiments, the ratio is less than about 0.40.

In another embodiment according to any of the previous embodiments, the distance measured to the one portion of the nacelle still results in a ratio less than about 0.45, and the distance measured to the other portion of the nacelle still results in the ratio greater than about 0.2.

These and other features may be best understood from the following drawings and specification.

### BRIEF DESCRIPTION OF THE DRAWINGS

Figure 1 schematically shows an embodiment of a gas turbine engine.
Figure 2 shows a challenge in short inlet engines.
Figure 3 shows a first embodiment.

### DETAILED DESCRIPTION

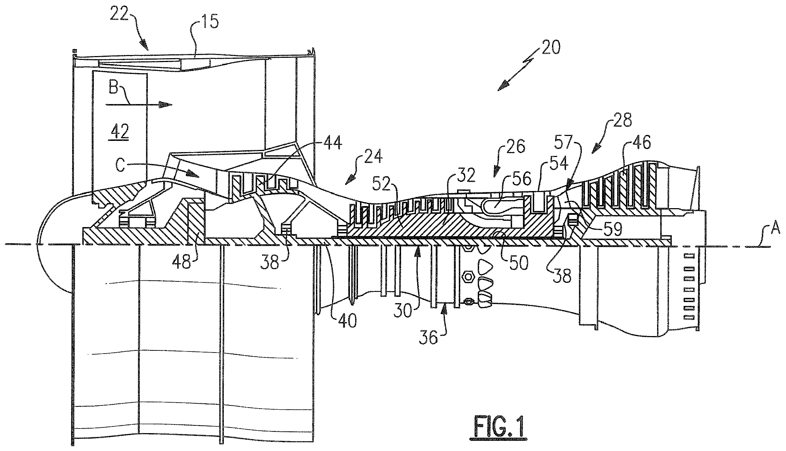

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x ⁹/₅). The "Low corrected fan tip speed" as disclosed herein according to one non-limiting embodiment is less than about 1150 ft / second (350.5 meters/second).

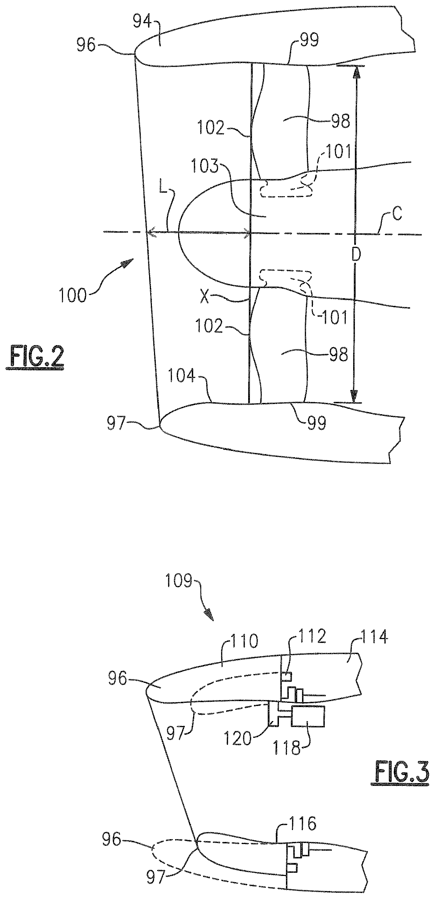

Figure 2 shows an engine 100 known as a short inlet engine. As shown, a nacelle 94 has forwardmost ends 96 and 97. As can be seen, the forwardmost ends do not lie in a common plane perpendicular to a center axis of the engine. Rather, point 96 is further forward than point 97. Fan blades 98 have an outer diameter 99. The nacelle 94 is shown to have a radially inwardly extending innermost point 104. Point 104 is radially inward of the outer diameter 99 of the fan blade 98. As shown schematically, the fan blades 98 have a root section 101 received in a hub 103 of the fan rotor. Due to the radially innermost point 104, and the mounting of the blade, it could be difficult to remove a fan blade 98 from the engine.

The short inlet is defined by a distance L measured from: (a) a plane X perpendicular to a central axis C, which plane also being tangent to a leading edge or forward most point 102 of the fan blade 98 to (b) a plane defined by the forwardmost points (including ends 96, 97) of the nacelle 94. A ratio is defined of L:D, with D being the outer diameter of the fan blade 98.

In one embodiment L:D is between about 0.2 and about 0.45. Alternatively, the ratio may be greater than about 0.25 and in alternative embodiments greater than about 0.30. In embodiments, the ratio of L:D may be less than about 0.40.

As can be appreciated, the L:D quantity would be different if measured to the forward point 96 than to the forward point 97. However, in embodiments the ratio at the forward most point 96 would still be less than about 0.45, and the ratio at the shortest point 97 would still be greater than about 0.2.

Stated another way, the forwardmost end of the nacelle 94 extends outwardly for varying extents across the circumference of the nacelle, and the ratio of the L:D for all portions of the varying distance of the nacelle being between about 0.2 and about 0.45.

The different distances to the forwardmost ends 96 and 97 result in a nacelle configuration having a feature called "droop."

Figure 3 shows an engine 109 wherein the nacelle 110 may rotate.

The nacelle 110 has the droop feature, as explained above with regard to Figure 2. As can be appreciated, the bottom dead center, or 6:00 point 97 defines a shorter length of the inlet before reaching the fan blade 98. There are benefits for having this orientation during flight. However, this arrangement would also result in increased noise because the shorter portion of the inlet that is facing the ground has less treatment to attenuate the radiated noise and also provides less shielding to the radiated noise towards he ground. This can raise noise issues such as during landing, or take-off, when the aircraft is closer to the earth.

Thus, the engine 109 has the rotatable nacelle 110. The nacelle 110 has some guiding structure, shown schematically at 112, which guides it in a static mount 114. The engine is shown with gear teeth 116 along the inner periphery of the nacelle 110. A motor 118 drives a geared output member 120, which can cause the rotatable nacelle 110 to rotate. It should be understood that this arrangement is a conceptual or basic arrangement for driving the nacelle 110 to rotate. It is envisioned that the ultimate drive structure would not be within the inner periphery of the nacelle 110, but incorporated in a manner that it will not interfere with airflow through the inlet provided by the nacelle 110.

When at cruise, the nacelle may be positioned as shown in Figure 3 in solid line. However, when the aircraft is closer to the earth, such as for landing, or when it is taking off, the nacelle 110 may be rotated to the position shown in phantom, wherein the forward end 96 will now be at bottom dead center while the rearward end 97 will be at top dead center. It should be understood that intermediate locations may also be utilized. Generally, the rearward portion 97 would be positioned within 10° of top dead center in the position where reduced sound is desirable.

Stated another way, a nacelle 110 is positioned about a fan rotor 103, which carries a plurality of fan blades 98. The nacelle is formed with droop such that one portion 96 extends axially further from the fan blades than does another portion 97. The nacelle is rotated such that the one portion and the another portion are positioned in distinct circumferential locations depending on flight conditions of an aircraft incorporating the engine.

Although an embodiment has been disclosed, a worker of ordinary skill in this art would recognize that certain modifications would come within the scope of this disclosure. For that reason, the following claims should be studied to determine the true scope and content of this invention.

## Claims

1. A gas turbine engine (20,100,109) for an aircraft comprising:
a nacelle (94,110) enclosing a fan rotor (103) carrying a plurality of fan blades (98), wherein said nacelle (94,110) is formed such that one portion (96) extends axially further from said fan blades (98) than does another portion (97), and said nacelle (94,110) is rotatable such that a circumferential location of said one portion (96) and said another portion (97) may be varied dependent on flight conditions, wherein said one portion (96) is positioned within 10° of top dead center during conditions including cruise, and said another portion (97) is positioned within 10° of top dead center during conditions including landing,
**characterised in that**:
a distance (L) is defined from a plane (X) defined by leading edges (102) of said fan blades (98) to an axial location of a forwardmost part (96,97) of said nacelle (94,110), and an outer diameter (D) of said fan blades (98) is defined, and a ratio of said distance (L) to said outer diameter (D) is between about 0.2 and about 0.5.

2. A method of operating a gas turbine engine (20,100,109) comprising:
positioning a nacelle (94,110) about a fan rotor (103), with said fan rotor (103) carrying a plurality of fan blades (98), said nacelle (94,110) being formed such that one portion (96) extends axially further from said fan blades (98) than does another portion (97); and
rotating said nacelle (94,110) such that said one portion (96) and said another portion (97) are positioned in distinct circumferential locations depending on flight conditions of an aircraft incorporating the engine (20,100,109), wherein said one portion (96) is positioned within 10° of top dead center during conditions including cruise, and said another portion (97) is positioned within 10° of top dead center during conditions including landing,
**characterised in that**:
a distance (L) is defined from a plane (X) defined by leading edges (102) of said fan blades (98) to an axial location of a forwardmost part (96,97) of said nacelle (94,110), and an outer diameter (D) of said fan blades (98) is defined, and a ratio of said distance (L) to said outer diameter (D) is between about 0.2 and about 0.5.

3. The gas turbine engine (20,100,109) or method as set forth in claim 1 or 2, wherein a motor (118) drives a geared output member (120) to engage gear teeth (116) on said nacelle (94,110) to cause said nacelle (94,110) to rotate.

4. The gas turbine engine (20,100,109) or method as set forth in any preceding claim, wherein said nacelle (94,110) is guided for rotation within a static structure (114).

5. The gas turbine engine (20,100,109) or method as set forth in any preceding claim, wherein said ratio is greater than 0.25.

6. The gas turbine engine (20,100,109) or method as set forth in claim 5, wherein said ratio is greater than 0.30.

7. The gas turbine engine (20,100,109) or method as set forth in any preceding claim, wherein said ratio is less than 0.40.

8. The gas turbine engine (20,100,109) or method as set forth in any preceding claim, wherein the distance (L) measured to the one portion (96) of said nacelle (94,110) still results in said ratio being less than 0.45, and the distance (L) measured to the other portion (97) of said nacelle (94,110) still results in said ratio being greater than 0.2.

## Patentansprüche

1. Gasturbinentriebwerk (20, 100, 109) für ein Luftfahrzeug, umfassend:
eine Gondel (94, 110), die einen Gebläserotor (103) umschließt, der eine Vielzahl von Gebläselaufschaufeln (98) trägt, wobei die Gondel (94, 110) derart gebildet ist, dass sich ein Abschnitt (96) axial weiter von den Gebläselaufschaufeln (98) erstreckt als ein anderer Abschnitt (97), und wobei die Gondel (94, 110) derart drehbar ist, dass eine Umfangsstelle des einen Abschnitts (96) und des anderen Abschnitts (97) in Abhängigkeit von Flugzuständen variiert werden kann, wobei der eine Abschnitt (96) während Zuständen einschließlich des Reiseflugs innerhalb von 10° von dem oberen Totpunkt positioniert ist und wobei der andere Abschnitt (97) während Zuständen einschließlich der Landung innerhalb von 10° von dem oberen Totpunkt positioniert ist,
**dadurch gekennzeichnet, dass**:
eine Distanz (L) von einer Ebene (X) definiert ist, die von Vorderkanten (102) der Gebläselaufschaufeln (98) zu einer axialen Stelle eines vordersten Teils (96, 97) der Gondel (94, 110) definiert ist, und ein Außendurchmesser (D) der Gebläselaufschaufeln (98) definiert ist, und ein Verhältnis der Distanz (L) zu dem Außendurchmesser (D) zwischen etwa 0,2 und etwa 0,5 beträgt.

2. Verfahren zum Betreiben eines Gasturbinentriebwerks (20, 100, 109), umfassend:
Positionieren einer Gondel (94, 110) um einen Gebläserotor (103), wobei der Gebläserotor (103) eine Vielzahl von Gebläselaufschaufeln (98) trägt, wobei die Gondel (94, 110) derart gebildet ist, dass sich ein Abschnitt (96) axial weiter von den Gebläselaufschaufeln (98) erstreckt als ein anderer Abschnitt (97); und
Drehen der Gondel (94, 110), so dass der eine Abschnitt (96) und der andere Abschnitt (97) in Abhängigkeit von den Flugzuständen eines Luftfahrzeugs, in welches das Triebwerk (20, 100, 109) integriert ist, an verschiedenen Umfangsstellen positioniert sind, wobei der eine Abschnitt (96) während Zuständen einschließlich des Reiseflugs innerhalb von 10° von dem oberen Totpunkt positioniert ist und wobei der andere Abschnitt (97) während Zuständen einschließlich der Landung innerhalb von 10° von dem oberen Totpunkt positioniert ist,
**dadurch gekennzeichnet, dass**:
eine Distanz (L) von einer Ebene (X) definiert ist, die von Vorderkanten (102) der Gebläselaufschaufeln (98) zu einer axialen Stelle eines vordersten Teils (96, 97) der Gondel (94, 110) definiert ist, und ein Außendurchmesser (D) der Gebläselaufschaufeln (98) definiert ist, und ein Verhältnis der Distanz (L) zu dem Außendurchmesser (D) zwischen etwa 0,2 und etwa 0,5 beträgt.

3. Gasturbinentriebwerk (20, 100, 109) oder Verfahren nach Anspruch 1 oder 2, wobei ein Motor (118) ein gezahntes Ausgangselement (120) antreibt, um die Verzahnung (116) mit der Gondel (94, 110) in Eingriff zu bringen, um die Gondel (94, 110) zum Drehen zu bringen.

4. Gasturbinentriebwerk (20, 100, 109) oder Verfahren nach einem der vorstehenden Ansprüche, wobei die Gondel (94, 110) zum Drehen in einer statischen Struktur (114) geführt wird.

5. Gasturbinentriebwerk (20, 100, 109) oder Verfahren nach einem der vorstehenden Ansprüche, wobei das Verhältnis größer als 0,25 ist.

6. Gasturbinentriebwerk (20, 100, 109) oder Verfahren nach Anspruch 5, wobei das Verhältnis größer als 0,30 ist.

7. Gasturbinentriebwerk (20, 100, 109) oder Verfahren nach einem der vorstehenden Ansprüche, wobei das Verhältnis kleiner als 0,40 ist.

8. Gasturbinentriebwerk (20, 100, 109) oder Verfahren nach einem der vorstehenden Ansprüche, wobei die Distanz (L), die zu dem einem Abschnitt (96) der Gondel (94, 110) gemessen ist, noch zu einem Verhältnis führt, das kleiner als 0,45 ist, und wobei die Distanz (L), die zu dem anderen Abschnitt (97) der Gondel (94, 110) gemessen ist, noch zu einem Verhältnis führt, das größer als 0,2 ist.

## Revendications

1. Turbine à gaz (20, 100, 109) pour un aéronef comprenant :
une nacelle (94, 110) enfermant un rotor de soufflante (103) portant une pluralité de pales de soufflante (98), dans laquelle ladite nacelle (94, 110) est formée de sorte qu'une partie (96) s'étend axialement plus loin desdites pales de soufflante (98) qu'une autre partie (97), et ladite nacelle (94, 110) peut tourner de sorte qu'un emplacement circonférentiel de ladite une partie (96) et de ladite autre partie (97) peut varier en fonction des conditions de vol, dans laquelle ladite une partie (96) est positionnée à moins de 10° du point mort haut pendant les conditions comprenant la croisière, et ladite autre partie (97) est positionnée à moins de 10° du point mort haut pendant les conditions comprenant l'atterrissage,
**caractérisée en ce que** :
une distance (L) est définie à partir d'un plan (X) défini par les bords d'attaque (102) desdites pales de soufflante (98) jusqu'à un emplacement axial d'une partie la plus en avant (96, 97) de ladite nacelle (94,110), et un diamètre extérieur (D) desdites pales de soufflante (98) est défini, et un rapport entre ladite distance (L) et ledit diamètre extérieur (D) est compris entre 0,2 et 0,5.

2. Procédé de fonctionnement d'une turbine à gaz (20, 100, 109) comprenant :
le positionnement d'une nacelle (94, 110) autour d'un rotor de soufflante (103), ledit rotor de soufflante (103) portant une pluralité de pales de soufflante (98), ladite nacelle (94, 110) étant formée de sorte qu'une partie (96) s'étend axialement plus loin à partir desdites pales de soufflante (98) qu'une autre partie (97) ; et
la rotation de ladite nacelle (94, 110) de sorte que ladite une partie (96) et ladite autre partie (97) sont positionnées dans des emplacements circonférentiels distincts en fonction des conditions de vol d'un aéronef incorporant la turbine (20, 100, 109), dans lequel ladite une partie (96) est positionnée à moins de 10° du point mort haut pendant les conditions comprenant la croisière, et ladite autre partie (97) est positionnée à moins de 10° du point mort haut pendant les conditions comprenant l'atterrissage,
**caractérisée en ce que** :
une distance (L) est définie à partir d'un plan (X) défini par les bords d'attaque (102) desdites pales de soufflante (98) jusqu'à un emplacement axial d'une partie la plus en avant (96, 97) de ladite nacelle (94, 110), et un diamètre extérieur (D) desdites pales de soufflante (98) est défini, et un rapport entre ladite distance (L) et ledit diamètre extérieur (D) est compris entre 0,2 et 0,5.

3. Turbine à gaz (20, 100, 109) ou procédé selon la revendication 1 ou 2, dans lequel un moteur (118) entraîne un élément de sortie à engrenages (120) pour mettre en prise des dents d'engrenage (116) sur ladite nacelle (94, 110) pour amener ladite nacelle (94, 110) à entrer en rotation.

4. Turbine à gaz (20, 100, 109) ou procédé selon une quelconque revendication précédente, dans lequel ladite nacelle (94, 110) est guidée pour une rotation dans une structure statique (114).

5. Turbine à gaz (20, 100, 109) ou procédé selon une quelconque revendication précédente, dans lequel ledit rapport est supérieur à 0,25.

6. Turbine à gaz (20, 100, 109) ou procédé selon la revendication 5, dans lequel ledit rapport est supérieur à 0,30.

7. Turbine à gaz (20, 100, 109) ou procédé selon une quelconque revendication précédente, dans lequel ledit rapport est inférieur à 0,40.

8. Turbine à gaz (20, 100, 109) ou procédé selon une quelconque revendication précédente, dans lequel la distance (L) mesurée à l'une partie (96) de ladite nacelle (94, 110) a toujours pour résultat que ledit rapport est inférieur à 0,45, et la distance (L) mesurée à l'autre partie (97) de ladite nacelle (94, 110) a toujours pour résultat que ledit rapport est supérieur à 0,2.
